# EUROPÄISCHE PATENTSCHRIFT

(11) **EP 1 759 808 B1**
(45) Veröffentlichungstag und Bekanntmachung des Hinweises auf die Patenterteilung: **27.05.2009**
(21) Anmeldenummer: 06120125.7
(22) Anmeldetag: 05.09.2006
(51) Int. Cl.: B23Q 1/48, B23Q 7/00, B23K 37/047, B25J 9/00, B23P 19/00, B23P 21/00

(54) **Flexible Fertigungszelle für die Bearbeitung von Bauteilen, insbesondere von Fahrzeugkarosserien**
Flexible manufacturing cell for machining of parts, especially of vehicle body parts
Cellule flexible de fabrication pour l'usinage de pièces, notamment de pièces de carrosserie de véhicules

(30) Priorität: 06.09.2005 DE 102005042179
(43) Veröffentlichungstag der Anmeldung: 07.03.2007
(73) Patentinhaber: ThyssenKrupp Drauz Nothelfer GmbH, 74076 Heilbronn (DE); AUDI AG, 85045 Ingolstadt (DE)
(72) Erfinder: Rübmann, Klaus, 74613, Öhringen/Michelbach a.W. (DE); Stein, Hans, 09337, Wüstenbrand (DE); Sauermann, Werner, 09353, Oberlungwitz (DE); Schmidt, Johann-Anton, 85135, Titting-Petersbuch (DE)
(74) Vertreter: Cohausz & Florack

(56) Entgegenhaltungen:
- EP-A- 0 266 056
- EP-A- 0 925 883
- DE-A1- 4 422 380
- DE-U1-6202005 002 55
- US-A1- 2002 185 359
- "VERSATILE RIVETER GETS AROUND" MACHINE DESIGN, PENTON MEDIA, CLEVELAND, OH, US, Bd. 68, Nr. 4, 22. Februar 1996 (1996-02-22), Seite 62, XP000556034 ISSN: 0024-9114
- PATENT ABSTRACTS OF JAPAN Bd. 2000, Nr. 01, 31. Januar 2000 (2000-01-31) -& JP 11 285894 A (LINE WORKS:KK), 19. Oktober 1999 (1999-10-19)
- PATENT ABSTRACTS OF JAPAN Bd. 018, Nr. 514 (M-1680), 28. September 1994 (1994-09-28) -& JP 06 179136 A (MAZDA MOTOR CORP), 28. Juni 1994 (1994-06-28)

## Beschreibung

In flexiblen Fertigungszellen für die Bearbeitung von Bauteilen für Fahrzeugkarosserien wird ein Bauteil oder eine Bauteilgruppe von einem oder mehreren Bearbeitungsrobotern, z.B. Schweißrobotern, bearbeitet (DE 44 22 380 A1). Das Bauteil oder die Bauteilgruppe wird in einer Einlegestation mittels eines fahrbaren Bauteil- oder Werkstückträgers lagestabil und bearbeitungsgerecht festgespannt und an die Arbeitsstation gefahren, an der die Bearbeitungsroboter die Bearbeitung vornehmen. Die fahrbaren Bauteil- oder Werkstückträger sind mit auswechselbaren Spannvorrichtungen bestückt, um entsprechend dem Bauteiltyp das Bauteil lagestabil und bearbeitungsgerecht in der Arbeitsstation dem Bearbeitungsroboter zu präsentieren. Wegen der auswechselbaren Spannvorrichtungen lassen sich in ein und derselben Fertigungszelle flexibel verschiedene Bauteile bearbeiten.

Bei der bekannten flexiblen Fertigungszelle sind mehrere Arbeitsstationen vorgesehen, die in sogenannten, nebeneinander angeordneten Kleinarbeitslinien integriert sind. Die eingesetzten Bearbeitungsroboter können so die Bauteile an mehreren Arbeitsstationen der Kleinarbeitslinien bedienen. Bei der Bearbeitung eines Bauteils in einer Arbeitsstation verbleibt das Bauteil in seiner durch die Spannvorrichtung des fahrbaren Bauteilträgers vorgegebenen Lage. Diese Lage ist allerdings nicht für jede Bearbeitung in Bezug auf den Bearbeitungsroboter optimal, insbesondere dann nicht, wenn unterschiedliche Bearbeitungsarten und unterschiedliche Materialien der Bauteile bearbeitet werden sollen.

Der Erfindung liegt die Aufgabe zugrunde, eine im Aufbau einfache flexible Fertigungszelle für die Bearbeitung von Bauteilen insbesondere von Fahrzeugkarosserien zu schaffen, die eine optimale Bearbeitung der Bauteile gewährleistet.

Diese Aufgabe wird mit einer flexiblen Fertigungszelle gelöst, die folgende Komponenten aufweist:
a) neben einer Arbeitsstation ist auf mindestens einer ihrer gegenüberliegenden Seiten ein mit einem Werkzeug bestückter Bearbeitungsroboter angeordnet;
b) jeder Bearbeitungsroboter ist auf einer neben der Arbeitsstation angeordneten Brücke in Richtung ihrer Längsachse verfahrbar;
c) eine Spannvorrichtung für das Bauteil ist aus einer Parkposition unter der Brücke quer zur Längsachse der Brücke in die Arbeitsstation verfahrbar;
d) vor und/oder hinter der Arbeitsstation und neben der Brücke ist eine Hub- und Drehvorrichtung angeordnet, die mit Kupplungsmitteln an die Spannvorrichtung kuppelbar ist und mit der die Spannvorrichtung anhebbar und um eine zur Längsachse der Brücke parallele Achse drehbar ist.

Bei der erfindungsgemäßen Fertigungszelle wird das Bauteil von der Spannvorrichtung lagestabil und bearbeitungsgerecht gehalten. Da die Spannvorrichtung in der Arbeitsstation an die Hub- und Drehvorrichtung gekuppelt wird, kann das Bauteil in eine für die Bearbeitung durch den Bearbeitungsroboter optimale Höhen- und Drehlage gebracht werden. Der drehbare und in Längsrichtung der Brücke verfahrbare Bearbeitungsroboter kann dann problemlos jeden Ort am Bauteil optimal erreichen. Besonders rationell ist die Bearbeitung des Bauteils dann, wenn gleichzeitig zwei Bearbeitungsroboter auf parallelen Brücken auf beiden Seiten der Arbeitsstation verfahrbar sind. Insbesondere bei schweren Bauteilen sollte die Spannvorrichtung an zwei gegenüberliegenden Hub- und Drehvorrichtungen ankuppelbar sein.

Nach einer ersten Ausgestaltung ist die Parkstation auch Ladestation für die Bestückung der Spannvorrichtung mit dem Bauteil. Dafür ist es lediglich erforderlich, oberhalb der vom Wagen getragenen Spannvorrichtung genügend Kopffreiheit vorzusehen.

Die Spannvorrichtung kann, wie an sich bekannt, zum gleichzeitigen Spannen von mehreren zueinander in vorgegebene räumliche Beziehung zu positionierenden Bauteilen eingerichtet sein. So können bei einer Bauteilgruppe z.B. einer Außenhaut einer Fahrzeugtür und eines damit zu verschweißenden Innenbleches die Außenhaut und das Innenblech zueinander lagestabil und bearbeitungsgerecht festgespannt werden.

Im Folgenden wird die Erfindung anhand einer eine flexible Fertigungszelle schematisch darstellenden Zeichnung näher erläutert. Im einzelnen zeigen:

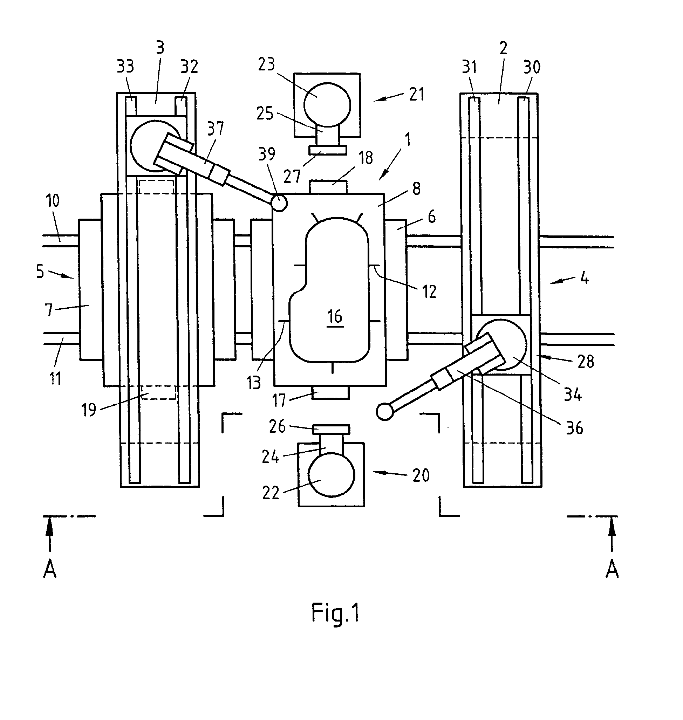

- Fig. 1: die Fertigungszelle in Aufsicht,

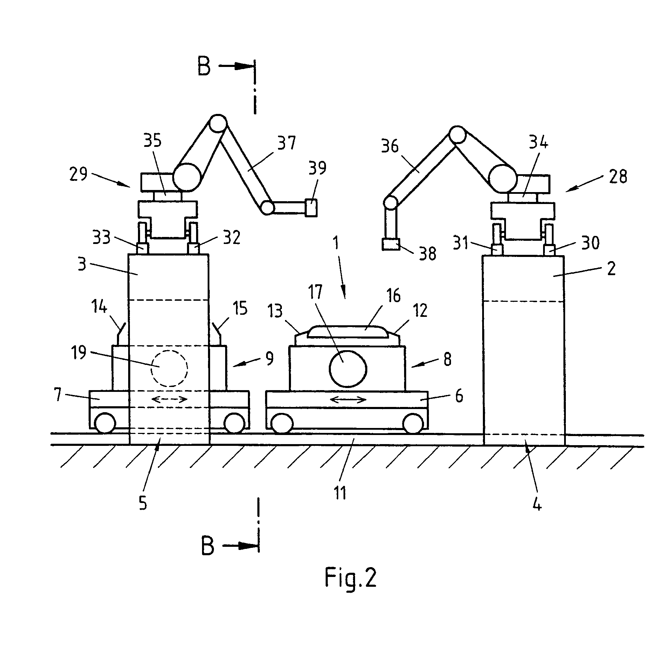

- Fig. 2: die Fertigungszelle in Stirnansicht nach Linie A-A der Fig. 1 und

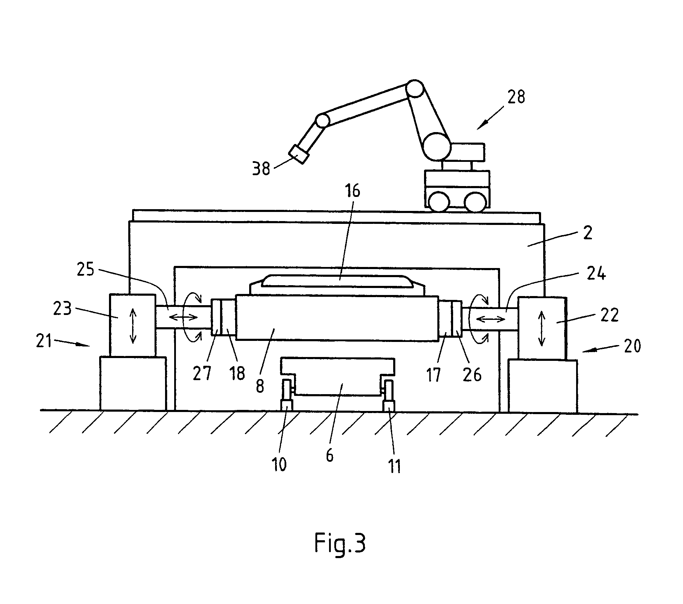

- Fig. 3: die Fertigungszelle in Seitenansicht von der Linie B-B der Fig. 1.

Die in den Figuren dargestellte flexible Fertigungszelle weist eine Arbeitsstation 1 auf, die zwischen zwei parallelen, gegenüberliegenden Brücken 2, 3 sich befindet.

Unter den Brücken 2, 3 ist jeweils eine Parkstation 4, 5 für Wagen 6, 7 vorgesehen. Die Wagen 6, 7 sind aus den jeweiligen Parkstationen 4, 5 über Schienen 10, 6 in die Arbeitsstation 1 verfahrbar. Auf jedem Wagen ist eine auswechselbare Spannvorrichtung 8, 9 angeordnet. Die Spannvorrichtung 8, 9 ist oberseitig mit Spannmitteln 12, 13, 14, 15 versehen, um ein zu bearbeitendes Bauteil 16 lagegenau zu positionieren. Auf beiden Stirnseiten trägt die Spannvorrichtung 8, 9 einen Kupplungsflansch 17, 18, 19.

Anstelle eines auf Schienen verfahrbaren Wagens kann auch ein auf Gleitbahnen verfahrbarer Schlitten vorgesehen sein. Es ist sogar möglich, die Spannvorrichtungen unmittelbar auf Gleitbahnen oder Rollgängen zu verfahren.

Auf gegenüberliegenden Seiten der Arbeitsstation 1 ist jeweils eine Hub- und Drehvorrichtung 20, 21 angeordnet. Jede Hub- und Drehvorrichtung 20, 21 weist eine Säule 22, 23 und einen an der Säule 21, 22 angeschlossenen Ausleger 24, 25 auf, der am freien Ende einen Kupplungsflansch 26, 27 trägt. Sowohl die Säule 22, 23 als auch der Ausleger 24, 25 sind teleskopierbar, so dass jeder Flansch 26, 27 an den gegenüberliegenden Flansch 17, 18 der Spannvorrichtung 8 ankuppelbar ist. Darüber hinaus ist dem Flansch 26, 27 ein Drehantrieb zugeordnet. Mittels der Hub- und Dreheinrichtung 20, 21 kann somit die mit dem Werkstück 16 bestückte Spannvorrichtung 8 vom Wagen 6 abgehoben und in jede Drehlage gebracht werden.

Auf den Brücken 2, 3 sind Bearbeitungsroboter 28, 29 in Richtung der Längsachse der Brücken 2, 3 auf Schienen 30, 31, 32, 33 verfahrbar. Die Arbeitsroboter 28, 29 weisen an einem Drehturm 34, 35 einen mehrgelenkigen Auslegerarm 36, 37 mit einem am Ende angebrachten Bearbeitungswerkzeug 38, 39, z.B. einem Schweißkopf, auf.

Mit der erfindungsgemäßen flexiblen Fertigungszelle lässt sich das Bauteil 16 folgendermaßen bearbeiten:

Der in der Zeichnung in der Arbeitsposition 6 befindliche Wagen 6 befindet sich zunächst in der Parkstation 4 unter der Brücke 2. An dieser Position wird er mit der für das zu bearbeitende Bauteil 16 passenden Spannvorrichtung 8 beladen. An dieser Position wird vorzugsweise auch das Bauteil 16 lagegenau und bearbeitungsgerecht mittels der Spannmittel 12, 13, z.B. Klauen, festgespannt. Dann wird der so bestückte Wagen 6 aus der Parkposition 4 in die Arbeitsstation 1 verfahren. Die beiden Hub- und Drehvorrichtungen 20, 21 werden an die Spannvorrichtung 8 angekuppelt. Dann wird die Spannvorrichtung 8 mit den Hub- und Drehvorrichtungen 20, 21 vom Wagen 6 abgehoben und in die für die Bearbeitung durch den bzw. die Bearbeitungsroboter 28, 29 passende Höhen- und Drehlage gebracht. Die Bearbeitungsroboter 28, 29 umfahren mit ihren Werkzeugen 38, 39 das aufgespannte Bauteil 16 und bearbeiten es an den vorgesehenen Stellen. Dabei können sich Bauteil 16 und Werkzeug 38, 39 auch relativ zueinander bewegen.

Die besonderen Vorteile der Erfindung bestehen darin, dass auf kleinem Raum bei vergleichsweise geringem Aufwand an technischem Gerät die Bearbeitung verschiedenartiger Bauteile 16 unter optimalen räumlichen Bedingungen gewährleistet ist.

## Patentansprüche

1. Flexible Fertigungszelle für die Bearbeitung von Bauteilen, insbesondere von Fahrzeugkarosserien mit folgenden Komponenten:
a) neben einer Arbeitsstation (1) ist auf mindestens einer ihrer gegenüberliegenden Seiten ein mit einem Werkzeug (38, 39) bestückter Bearbeitungsroboter (28, 29) angeordnet;
b) jeder Bearbeitungsroboter (28, 29) ist auf einer neben der Arbeitsstation (1) angeordneten Brücke (2, 3) in Richtung ihrer Längsachse verfahrbar;
c) eine Spannvorrichtung (8, 9) für das Bauteil (16) ist aus einer Parkposition (4, 5) unter der Brücke (2, 3) quer zur Längsachse der Brücke (2, 3) in die Arbeitsstation (1) verfahrbar;
d) vor und/oder hinter der Arbeitsstation (1) und neben der Brücke (2, 3) ist eine Hub- und Drehvorrichtung (20, 21) angeordnet, die mit Kupplungsmitteln (17, 18, 26, 27) an die Spannvorrichtung (8, 9) kuppelbar ist und mit der die Spannvorrichtung (8, 9)anhebbar und um eine zur Längsachse der Brücke (2, 3) parallele Achse drehbar ist.

2. Fertigungszelle nach Anspruch 1, **dadurch gekennzeichnet, dass** die Parkstation (4, 5) auch als Ladestation für die Bestückung der Spannvorrichtung (8, 9) mit dem Bauteil (16) dient.

3. Fertigungszelle nach Anspruch 1 oder 2, **dadurch gekennzeichnet, dass** jede Spannvorrichtung (8, 9) für das gleichzeitige Spannen von mehreren zueinander in vorgegebener räumlicher Beziehung zu positionierenden Bauteilen (16) eingerichtet ist.

## Claims

1. Flexible production cell for the processing of subassemblies, particularly of vehicle bodies, with the following components:
a) a processing robot (28, 29) equipped with a tool (38, 39) is arranged beside a work station (1) on at least one of its opposite sides;
b) each processing robot (28, 29) can be moved on a bridge (2, 3), which is arranged beside the work station (1), in the direction of the longitudinal axis of the bridge;
c) a clamping device (8, 9) for the subassembly (16) can be moved from a park position (4, 5) under the bridge (2, 3), transversely to the longitudinal axis of the bridge (2, 3) into the work station (1);
d) a lifting and rotating device (20, 21) is arranged upstream and/or downstream of the work station (1) and beside the bridge (2, 3), which lifting and rotating device (20; 21) can be coupled to the clamping device (8, 9) with coupling means (17, 18, 26, 27) and using which lifting and rotating device (20, 21), the clamping device (8, 9) can be lifted and rotated about an axis parallel to the longitudinal axis of the bridge (2, 3).

2. Production cell according to Claim 1, **characterized in that** the park station (4, 5) also serves as a loading station for equipping the clamping device (8, 9) with the subassembly (16).

3. Production cell according to Claim 1 or 2, **characterized in that** each clamping device (8, 9) is set up for the simultaneous clamping of a plurality subassemblies (16), which are to be positioned in a predetermined spatial relationship to one another

## Revendications

1. Cellule d'usinage pour le travail d'éléments, en particulier de carrosseries de véhicules automobiles, avec les composants suivants:
a) à côté d'un poste de travail (1) est disposé, sur au moins l'un de ses côtés opposés, un robot d'usinage (28, 29), qui est équipé d'un outil (38, 39);
b) chaque robot d'usinage (28, 29) peut être déplacé sur un pont (2, 3), disposé à côté du poste de travail (1), dans la direction de son axe longitudinal;
c) un dispositif de serrage (8, 9) pour l'élément (16) peut être conduit d'une position de stationnement (4, 5), sous le pont (2, 3), transversalement par rapport à l'axe longitudinal dudit pont (2, 3), dans le poste de travail (1);
d) en amont et / ou en aval du poste de travail (1) et à côté du pont (2, 3), est disposé un dispositif de levage et de rotation (20, 21), qui peut être couplé au dispositif de serrage (8, 9) avec des moyens de couplage (17, 18, 26, 27), et avec lequel le dispositif de serrage (8, 9) peut être soulevé et tourné autour d'un axe parallèle à l'axe longitudinal du pont (2, 3).

2. Cellule d'usinage selon la revendication 1, **caractérisée en ce que** le poste de stationnement (4, 5) sert aussi de poste de chargement pour le chargement du dispositif de serrage (8, 9) avec les éléments (16)

3. Cellule d'usinage selon revendication 1 ou 2, **caractérisée en ce que** chaque dispositif de serrage (8, 9) est aménagé pour le serrage simultané de plusieurs éléments (16) à positionner les uns par rapport aux autres dans une relation spatiale prédéterminée.
